# EUROPÄISCHE PATENTSCHRIFT

(11) **EP 2 874 563 B1**
(45) Veröffentlichungstag und Bekanntmachung des Hinweises auf die Patenterteilung: **30.12.2020**
(21) Anmeldenummer: 13739441.7
(22) Anmeldetag: 22.07.2013
(51) Int. Cl.: A61C 8/00

(54) **ABUTMENTSYSTEM FÜR SOFORTIMPLANTATE ZUM ERSTELLEN EINES ZAHNERSATZES**
ABUTMENT SYSTEM FOR IMMEDIATE IMPLANTS FOR PRODUCING A DENTAL PROSTHESIS
SYSTÈME DE PILIER POUR IMPLANTS IMMÉDIATS SERVANT À REMPLACER UNE PROTHÈSE DENTAIRE

(30) Priorität: 23.07.2012 EP 12177460
(43) Veröffentlichungstag der Anmeldung: 27.05.2015
(73) Patentinhaber: Olista AG, 8700 Küsnacht (CH)
(72) Erfinder: HANISCH, Oliver, F-75116 Paris (FR); PAUL, Stefan, CH-8001 Zürich (CH)
(74) Vertreter: Troesch Scheidegger Werner AG
(86) Internationale Anmeldenummer: PCT/EP2013/065406
(87) Internationale Veröffentlichungsnummer: WO 2014/016244

(56) Entgegenhaltungen:
- WO-A1-2004/037110
- WO-A1-2004/037110
- WO-A2-01/49199
- WO-A2-2006/138351
- WO-A2-2012/036395
- WO-A2-2014/012973
- JP-A- 2008 149 121
- US-A- 5 810 592

## Beschreibung

Die Erfindung betrifft ein Abutmentsystem zum Erstellen eines implantatgestützten Zahnersatzes. Insbesondere geht es um Abutmentsysteme für Einzelimplantate, die im Bereich der vorderen Zahnreihe oder der Prämolaren zum Einsatz kommen.

### Stand der Technik

Es ist bekannt, dass man verlorene oder extrahierte Zähne durch implantatgestützten Zahnersatz ersetzen kann. Seit mehr als 40 Jahren kommen die sogenannten osseointegrierten Implantate zum Einsatz. Bei der Osseointegration ergibt sich bei fachmännischer Handhabung ein stabiler Implantat-Knochenverbund. Bei den posterior angeordneten Zähnen geht es bei der Restauration primär um den Erhalt oder die Wiederherstellung der Kaufunktion. Im sichtbaren Bereich geht es jedoch auch um die Ästhetik, insbesondere um den Erhalt der Weichgewebe.

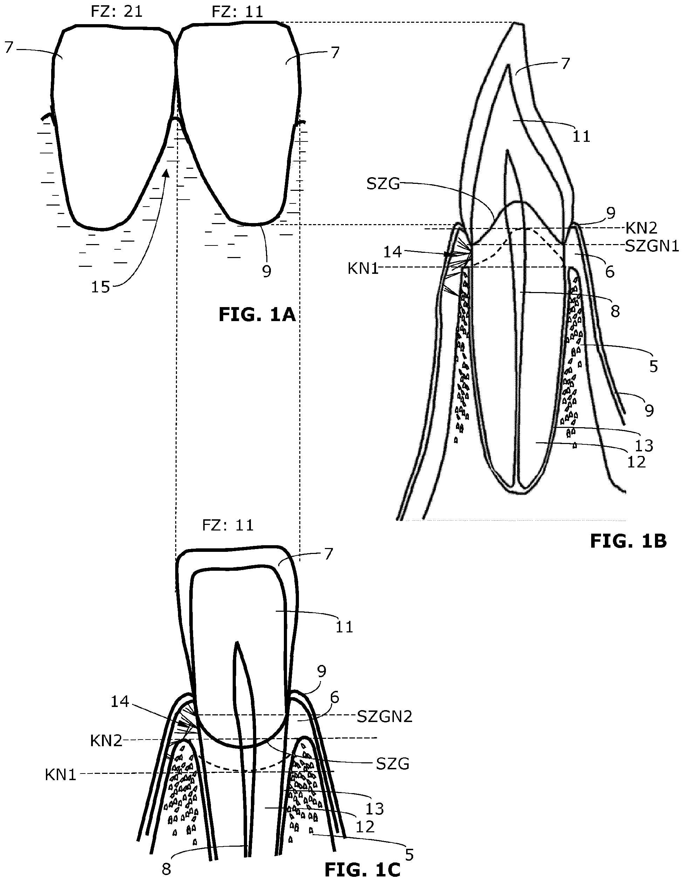

Fig. 1A zeigt eine schematisierte Frontalansicht zweier menschlicher Frontzähne FZ: 21 und FZ: 11 samt des umgebenden Zahnfleischs. In FIG. 1B ist in stark vereinfachter Form ein erster Vertikalschnitt durch einen der Frontzähne FZ: 11 und die umgebenden Strukturen gezeigt. Fig. 1C zeigt einen zweiten Vertikalschnitt durch denselben Frontzahn FZ: 11, wobei der zweite Vertikalschnitt senkrecht steht zum ersten Vertikalschnitt.

Da im Folgenden mehrfach auf die Zahnanatomie Bezug genommen wird, werden anhand von Fig. 1A bis 1C die wesentlichen Begriffe erläutert. Der Zahn FZ an sich ist aus dem Zahnbein (Dentin) 11 aufgebaut und im oberen (meist sichtbaren) Bereich mit Zahnschmelz 7 umgeben. Die entsprechende Schmelzzementgrenze SZG hat typischerweise einen skalopierten Verlauf, wie in FIG. 1B angedeutet. Die Zahnwurzel 12 sitzt in einen Zahnfach des Kieferknochens 5. Von aussen nach innen betrachtet sitzt das sogenannte Zahnfleisch (Epithel) 9 auf dem Bindegewebe 6. Im Bindegewebe 6 sind Kollagenfasern 14 angeordnet. Links oben sind in Fig. 1B und 1C einige dieser Kollagenfasern 14 angedeutet. Diese Fasern 14 umgeben den Zahn FZ ring- oder schlaufenförmig (in Draufsicht betrachtet). Zwischen dem Kieferknochen 5 und der aus dem Wurzeldentin bestehenden Zahnwurzel 12 ist das Parodont 13 angeordnet. Das Wurzeldentin ist aussen mit einer dünnen Schicht Wurzelzement überzogen. Im Inneren des Zahnes FZ sitzt der Nerv 8.

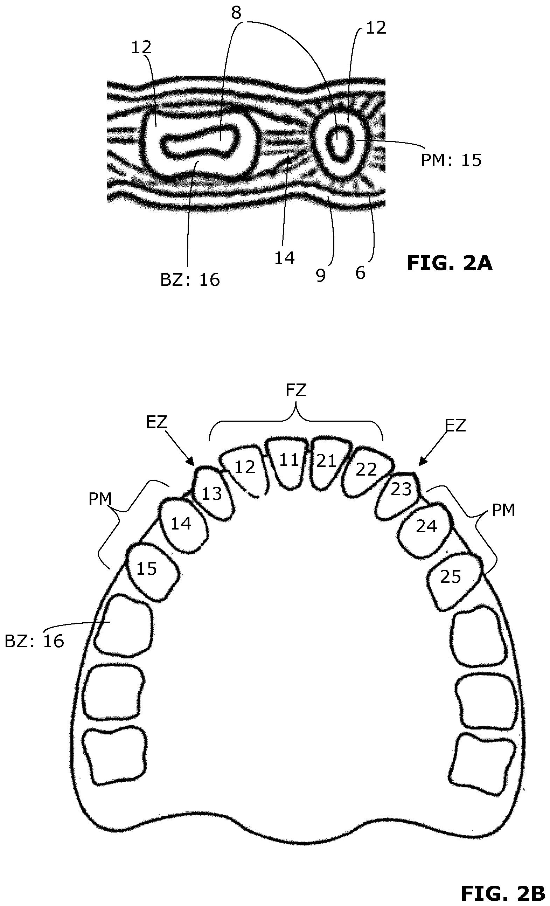

Fig. 2A zeigt von unten beispielhaft eine stark schematisierte Schnittansicht eines Backenzahns BZ: 16 und eines Prämolaren PM: 15 des Oberkiefers eines menschlichen Gebisses samt der umgebenden Weichgewebemorphologie knapp unterhalb der Schmelzzementgrenze SZG. In Fig. 2A erkennt man das Zahnfleisch 9 und das Bindegewebe 6. Der Verlauf der Kollagenfasern 14 im Bindegewebe 6 ist durch Linien/Kurven angedeutet, wobei die Kollagenfasern 14 die beiden gezeigten Zähne BZ und PM ring- oder schlaufenförmig umschliessen sowie auch auf der Wurzeloberfläche inserieren. Bei beiden Zähnen BZ und PM kann man im Querschnitt den innenliegenden Kanal des Nervs 8 und das umschließende Wurzeldentin der Zahnwurzel 12 erkennen. Aussen auf dem Wurzeldentin der Zahnwurzel 12 ist die dünne Schicht des Wurzelzementes angeordnet, was hier nicht gesondert dargestellt ist.

Fig. 2B zeigt beispielhaft eine schematisierte Ansicht des Oberkiefers eines menschlichen Gebisses von unten.

Nach dem Verlust oder der Extraktion eines Zahnes FZ im vordersten Kieferbereich und dem Einbringen eines Implantats ist teilweise bereits nach kurzer Zeit ein Schwund des Zahnfleischs 9 und/oder Kieferknochens 5 festzustellen. Dabei spielt unter anderem eine Rolle, ob das Implantat mit einer zeitlichen Verzögerung eingebracht wird, oder ob es im Rahmen einer Sofortimplantation unmittelbar nach der Extraktion des Zahnes FZ implantiert wird. Falls sich der Zahn FZ noch an Ort und Stelle befindet und eine Extraktion z.B. aufgrund einer lokalen Infektion oder eines Traumas angezeigt ist, kann davon ausgegangen werden, dass das Bindegewebe 6 und die Kontur/Struktur der umlagernden Kollagenfasern 14 noch intakt sind. Das unmittelbare Einbringen eines Implantats in die Extraktionsalveole und die Insertion einer provisorischen Restauration kann in diesen Fällen vorteilhaft sein. Die sogenannten sofort-sofort (immediate-immediate) Techniken zum Einbringen dentaler Implantate gewinnen daher an Bedeutung, obwohl bisher der verzögerte-sofort (delayed-immediate) Ansatz die am meisten verwendete Implantationstechnik ist.

Bei einem klassischen Zahnersatzimplantat sitzt das Implantat komplett epi- oder subcrestal. Bis heute herrscht die Lehrmeinung vor, dass dentale Implantate so gesetzt werden sollen, dass sich die Oberkante des Implantates auf oder (wenig) unterhalb des obersten unmittelbar umgebenden Knochenniveaus KN1 (siehe z.B. FIG. 1C) des Kieferknochens 5 befindet. Dies wird unter anderem damit begründet, dass man im Falle einer Rezession des Knochens 5 und der Weichgewebe 6, 9 verhindern möchte, dass die Oberkante des Implantats sichtbar wird.

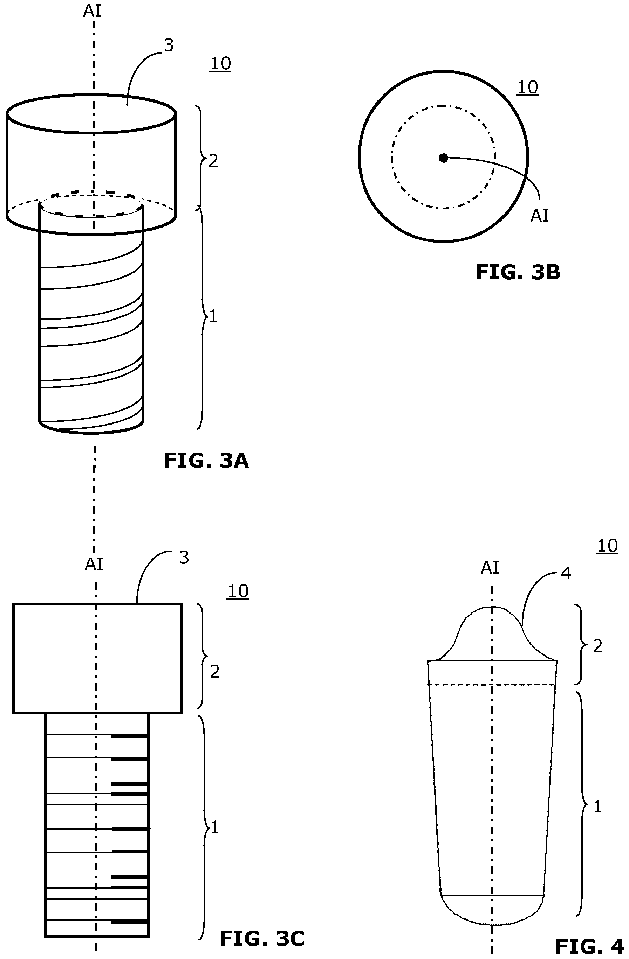

In den Figuren 3A bis 3C sind verschiedene, stark schematisierte Ansichten eines vorbekannten Implantats 1 und Abutments 2 anhand von Prinzipskizzen gezeigt. Als Zwischenglied zwischen einer Suprakonstruktion und/oder Krone und dem Implantat 1 wird typischerweise ein Abutment 2 eingesetzt, wie anhand der Figuren 3A bis 3C in stark vereinfachter Form gezeigt. Mit Bezug zu Fig. 1B sitzt das Abutment 2 typischerweise im Bereich der Durchtrittsstelle durch das Weichgewebe (Bindegewebe 6 und Ephitel 9), wobei die Schnittstelle zwischen Implantat und Abutment epi- oder subcrestal liegt in Abhängigkeit davon auf welcher Höhe das Implantat gesetzt wurde. Bisher kommen häufig Abutments 2 mit einer rotationssymmetrischen Grundform zum Einsatz. Solche Abutments 2 haben jedoch durch ihre rotationssymmetrische Grundform unter anderem den Nachteil, dass sie sich nicht optimal in die Zahnreihe einpassen lassen und so das Anfertigen der Suprakonstruktion erschweren oder in manchen Fällen unmöglich machen, da natürliche Frontzähne (FZ) und Prämolaren (PM) deltoide bzw. ovale Wurzelquerschnitte im Bereich der Schmelzzementgrenze SZG aufweisen. Ein Anpassen ("Beschleifen") im Mund des Patienten ist wegen des harten Materials des Abutments 2 kaum möglich. Derartige Probleme bestehen bei laborgefertigten, patientenindividuellen Abutments hingegen nicht. Allerdings ergibt sich hier ein hoher Kosten- und Zeitaufwand.

Die Abutments 2 haben bisher meist eine flache Oberseite 3, wie in Fig. 3A und Fig. 3C zu erkennen ist. Seit neuestem gibt es teilweise auch Abutments 2 mit einer sogenannten skalopierten (geschwungen oder sattelförmig verlaufende) Oberfläche 4, wie in Fig. 4 zu erkennen ist. Die skalopierte Oberfläche 4 nimmt bei dieser vorbekannten Lösung ansatzweise die Form der natürlichen Schmelzzementgrenze SZG des Zahnes FZ auf, der zuvor extrahiert worden ist.

Es gibt beispielsweise bereits ein skalopiertes Implantat 10, das in Fig. 4 schematisch gezeigt ist, und das von der Firma Nobel Biocare, Schweden, unter dem Namen NobelPerfect™ angeboten wird. Hierbei handelt es sich um ein einteiliges Implantat 10, bei dem das eigentliche Implantat 1 und das Abutment 2 einstückig ausgeführt sind. Das NobelPerfect™ Implantat 10 ist rotationssymmetrisch zur Implantatachse AI ausgelegt, wie in Fig. 4 erkennbar ist. Auch der Abutmentbereich 2 des Implantats 10 ist rotationssymmetrisch zur Implantatachse AI ausgelegt und hat eine Hutform. Details zu einem solchen skalopierten Implantat 10 sind zum Beispiel dem US Patent US 6,174,167 B1 zu entnehmen. In der Patentschrift US 6,174,167 B1 ist ein Implantat beschrieben, das eine skalopierte Oberfläche mit Wölbungen und Senken umfasst, um so die physiologisch Kontur der natürlichen Knochen-Gewebe-Morphologie abzubilden.

Aus der europäischen Patentanmeldung EP 1205158 A1 ist ein weiteres Implantat bekannt, dessen Form an die Niveauunterschiede im Verlauf des Kieferknochens angepasst ist. Gemäss dieser Patentanmeldung ist das Implantat an seinem distalen Ende an einander gegenüberliegenden Bereichen verbreitert. Das Implantat weist eine entsprechend der Verbreiterung geformte innere Ausnehmung auf. D.h. das Implantat ist mindestens im oberen Bereich hohl ausgeführt. In diese Ausnehmung kann ein entsprechend geformter Aufbaukörper eingesetzt werden, der als Abutment dient. Die Schnittstelle zwischen Implantat und Abutment ist innenliegend.

Es ist ein Nachteil dieser Lösung, dass das Implantat an sich in gewisser Weise an die Niveauunterschiede im Verlauf des Kieferknochens angepasst ist. Daher muss das Implantat exakt so implantiert werden, dass seine Verbreiterung gegenüber dem Verlauf des Kieferknochens die optimale Lage einnimmt. Wird das Implantat nicht weit genug oder zu weit eingeschraubt, steht dieses nicht in der optimalen Lage.

Ein mehrteiliges Abutmentsystem ist aus US 5 810 592 bekannt.

Es stellt sich die Aufgabe, ein Abutmentsystem und ein darauf aufbauendes Implantatsystem bereit zu stellen, das/die ein Implantationsverfahren ermöglicht, bei dem keine oder nur verschwindend kleine Rezessionen am Zahnfleisch und/oder Kieferknochen auftreten. Ausserdem sollen ästhetisch ansprechende und dauerhafte Zahnersatzlösungen vor allem bei den vorderen Zähnen und Prämolaren ermöglicht werden.

Gemäss Erfindung geht es um ein Abutmentsystem nach Anspruch 1, zur Verwendung im Bereich der vorderen Zähne und Prämolaren mit einer Abutmentbasis, die eine erste Schnittstelle zum Aufsetzen auf ein (Standard-) Implantat und eine zweite Schnittstelle zum Befestigen eines Prothetikelements (z.B. einer Krone oder Suprakonstruktion) umfasst, wobei die Abutmentbasis eine skalopierte Oberseite aufweist. Das Abutmentsystem der Erfindung ist im Prinzip unabhängig von der Schnittstelle zwischen dem (Standard-) Implantat und dem Abutment. Das Abutmentsystem der Erfindung kann nahezu an alle Schnittstellen angepasst werden.

Das Implantat legt nach dem Implantieren eine sogenannte Implantatachse fest. Das Abutmentsystem der Erfindung zeichnet sich dadurch aus, dass die Abutmentbasis eine drei-dimensionale Form hat, die nicht symmetrisch zu dieser Implantatachse ausgelegt ist, d.h. die drei-dimensionale Form der Abutmentbasis ist also kein Rotationskörper. Ausserdem weist die Abutmentbasis einen Mantelbereich auf, der im Vertikalschnitt betrachtet eine konkave Form hat. Das Abutmentsystem umfasst zusätzlich zu der Abutmentbasis einen separaten Prothetikpfosten, der im Bereich der skalopierten Oberseite der Abutmentbasis so befestigbar ist, dass sich der Prothetikpfosten im befestigten Zustand koaxial zu der Implantatachse erstreckt.

Die Abutmentbasis weist bei allen Ausführungsformen eine dreidimensionale asymmetrische Form auf, die in mesialer, distaler, vestibulärer und palatinaler Richtung der natürlichen dreidimensionalen asymmetrischen Form der Schmelzzementgrenze SZG im Wesentlichen angenähert ist. Die Abutmentbasis der Erfindung wird daher auch als anatomisch geformte Abutmentbasis bezeichnet.

Die Abutmentbasis hat bei allen Ausführungsformen einen konkaven Mantelbereich, der für einen fliessenden Übergang zwischen einer rotationssymmetrischen Schnittstellenfläche (im Bereich der ersten Schnittstelle) und einer nicht-symmetrischen, umlaufenden Kante/Schulter bzw. einer nicht-symmetrischen, skalopierten Oberfläche sorgt.

Der konkave Mantelbereich ergibt eine Art Taillierung der Abutmentbasis entlang des Verlaufs der skalopierten Schmelzzementgrenze SZG, was zu einer besseren Integration in die umgebende Gewebestruktur führt.

Es geht vor allem um Abutmentbasen, die auf Implantaten fixiert werden, nachdem diese in den Knochen des Ober- oder Unterkiefers eingebracht wurden. Auf oder an diesen Abutmentbasen kann ein herausnehmbarer oder festsitzender Zahnersatz verankert werden. Das Befestigen des Zahnersatzes erfolgt gemäss Erfindung mittels eines Prothetikpfostens, der separat von der jeweiligen Abutmentbasis ausgeführt ist.

Insbesondere geht es hier um die sogenannte Sofortimplantation, bei der unmittelbar oder verzögert nach der Extraktion eines Zahns oder Zahnrests das Implantat im Knochen des Ober- oder Unterkiefers implantiert und eine Abutmentbasis der Erfindung daran befestigt wird.

Gemäss Erfindung wird die Sofortimplantation bevorzugt, um bei Einzelzahnimplantaten die Weichgewebemorphologie zu erhalten. Es geht vor allem um den Erhalt der gingivalen Situation unter Einsatz eines speziellen Abutmentsystems, das z.B. auf einem kommerziell erhältlichen Implantat fixiert wird, d.h. es geht um ein zweiteiliges Implantat-Abutmentsystem.

Insbesondere geht es bei der Erfindung um die sogenannte Weichgewebsintegration der anatomisch geformten Abutmentbasis.

Als Implantat eignen sich für alle Ausführungsformen des Abutmentsystems Implantate mit einem Grundkörper, der parallelwandig oder wurzelförmig (konisch) ausgelegt ist und der eine rotationssymmetrische Form in Bezug zu einer zentralen Rotationsachse hat, die mit der Implantatachse zusammen fällt. Aktuell werden bevorzugt sogenannte Schraubenimplantate (screw-type implants) verwendet. Solche Schraubenimplantate - aber auch andere Standardimplantate - lassen sich im Zusammenhang mit der vorliegenden Erfindung verwenden. Das Implantat dient dabei jeweils als Verankerungselement im Kieferknochen.

Gemäss Erfindung sitzt die Abutmentbasis so, dass die Oberkante supracrestal angeordnet ist. Vorzugsweise (aber nicht ausschließlich) wird die Oberkante der Abutmentbasis ≥1 mm oberhalb der Knochencrete des Alveolarfaches des extrahierten Zahnes angeordnet. Besonders bevorzugt ist ein Implantationsverfahren, bei dem die Oberkante ca. 1,5 mm zirkulär über dem Kieferknochen liegt.

Als sogenannte Abutmentbasis dient ein in Serie vorgefertigtes Element/Bauteil, das als Verbindungselement zwischen dem Implantat und einer Suprakonstruktion oder Krone eingesetzt wird. Gemäss Erfindung können drei oder vier verschiedene Typen/Formen von Abutmentbasen bereit gestellt werden, um den verschiedenen Formen von Frontzähnen und Prämolaren Rechnung zu tragen.

Die Abutmentbasen der Erfindung können in höchster Qualität, Formhaltigkeit und mit dauerfesten Materialien in spezialisierten Fabrikationsstätten gefertigt werden. Die dauerfesten Materialien können unter Berücksichtigung der Formhaltigkeit und Körperverträglichkeit ausgewählt werden. Eine Bearbeitbarkeit der Abutmentbasen ist nicht erforderlich. Es eignet sich daher vor allem Titan, Titanlegierungen und Zirkonoxid als Material der Abutmentbasen.

Gemäss Erfindung kommt mindestens eine konfektionell gefertigte Abutmentbasis zum Einsatz. Die erwähnte Suprakonstruktion oder Krone ist hingegen meistens patientenindividuell gefertigt.

Gemäss Erfindung kann die Abutmentbasis z.B. über eine Polygonal-Schnittstelle mit dem Implantat verbunden werden. Je nach Auslegung ermöglicht die Polygonal-Schnittstelle drei oder mehr als drei Winkelstellungen (Indexierungspositionen) der Abutmentbasis in Bezug zum Implantat. Man gewinnt dadurch zusätzliche Freiheitsgrade, was es ermöglicht eine optimale Ausrichtung der konfektionell gefertigten, skalopierten Abutmentbasis in Bezug zu den Knochen- und Gewebestrukturen zu erzielen.

Der Einsatz einer erfindungsgemässen Implantat-Abutment-Restaurationseinheit (hier gesamthaft als Implantatsystem bezeichnet) liefert ästhetisch sehr ansprechende Ergebnisse, da vor allem im marginalen Weichgewebe keine oder nur eine sehr geringe Rezession zu verzeichnen ist.

Mit der Erfindung können die gingivalen Gewebestrukturen und deren Kontur weitestgehend erhalten bleiben, was unter anderem ein schnelles Einwachsen und stabiles Verankern bewirkt.

Weitere vorteilhafte Ausführungsformen sind den abhängigen Patentansprüchen zu entnehmen.

### ZEICHNUNGEN

Ausführungsbeispiele der Erfindung werden im Folgenden unter Bezugnahme auf die Zeichnungen näher beschrieben.
- **FIG. 1A**: zeigt eine schematisierte Frontalansicht zweier menschlicher Frontzähne samt des umgebenden Zahnfleischs;
- **FIG. 1B**: zeigt eine stark schematisierte Schnittansicht in mesialer Richtung betrachtet des rechten Frontzahns der Fig. 1A samt der umgebenden Weichgewebe- und Knochenmorphologie;
- **FIG. 1C**: zeigt eine stark schematisierte Schnittansicht in palatinaler Richtung betrachtet des rechten Frontzahns der Fig. 1A samt der umgebenden Weichgewebe- und Knochenmorphologie;
- **FIG. 2A**: zeigt eine stark schematisierte Schnittansicht eines Prämolaren PM: 15 und eines Backenzahns BZ: 16 des Oberkiefers eines menschlichen Gebisses samt der umgebenden Weichgewebemorphologie von unten betrachtet;
- **FIG. 2B**: zeigt eine schematisierte Ansicht eines menschlichen Oberkiefers von unten betrachtet;
- **FIG. 3A**: zeigt eine stark schematisierte Perspektivansicht eines Implantatsystems gemäss Stand der Technik, das ein parallelwandiges Implantat und ein darauf montiertes Abutment umfasst;
- **FIG. 3B**: zeigt eine stark schematisierte Draufsicht des Implantatsystems nach Fig. 3A;
- **FIG. 3C**: zeigt eine stark schematisierte Seitenansicht des Implantatsystems nach Fig. 3A;
- **FIG. 4**: zeigt eine schematisierte Seitenansicht eines einstückigen, skalopierten, rotationssymmetrischen Zahnersatz-Implantats gemäss Stand der Technik;
- **FIG. 5A**: zeigt eine Seitenansicht einer ersten Abutmentbasis der Erfindung in mesialer Richtung betrachtet (analog zur Blickrichtung in Fig. 1B), wobei die Position und Form eines passenden beispielhaften Implantats durch strichlierte Umrisslinien angedeutet ist;
- **FIG. 5B**: zeigt dieselbe Seitenansicht der ersten Abutmentbasis nach Fig. 5A, wobei Hilfslinien eingezeichnet sind;
- **FIG. 5C**: zeigt eine verkleinerte Seitenansicht der ersten Abutmentbasis nach Fig. 5A zusammen mit einem aufgesetzten Prothetikpfosten in mesialer Richtung betrachtet;
- **FIG. 5D**: zeigt eine Seitenansicht der ersten Abutmentbasis der Erfindung in palatinaler Richtung betrachtet;
- **FIG. 6A**: zeigt eine stark schematisierte Draufsicht einer weiteren Abutmentbasis der Erfindung, die einen leicht deltoiden Grundriss aufweist;
- **FIG. 6B**: zeigt eine Seitenansicht eines Prothetikpfostens zum Befestigen an einer erfindungsgemässen Abutmentbasis;
- **FIG. 6C**: zeigt eine um 90 Grad gedrehte Seitenansicht des Prothetikpfostens nach Fig. 6B;
- **FIG. 7**: zeigt eine stark vereinfachte Perspektivansicht eines beispielhaften Implantats gemäss Stand der Technik, das im Zusammenhang mit der vorliegenden Erfindung eingesetzt werden kann;
- **FIG. 8**: zeigt eine stark schematisierte Schnittansicht typischer Zahnformen und -grössen von unten (im Grundriss) betrachtet;
- **FIG. 9**: zeigt eine stark schematisierte Ansicht von vier typischen Abutmentformen und -grössen im Grundriss betrachtet;
- **FIG. 10A**: zeigt eine stark schematisierte Draufsicht einer weiteren Abutmentbasis der Erfindung, die einen ovalen Grundriss aufweist;
- **FIG. 10B**: zeigt eine stark schematisierte Perspektivansicht einer Krone, die zum Befestigen auf einer Abutmentbasis nach Fig. 10A aufgebaut wurde.

### Detaillierte Beschreibung

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Schutzansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäss anzuwenden.

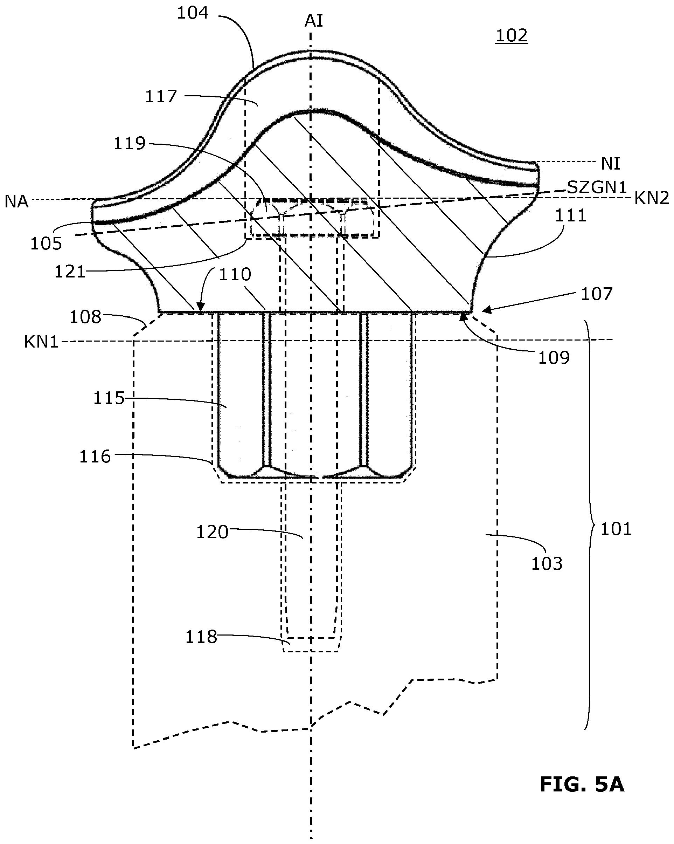

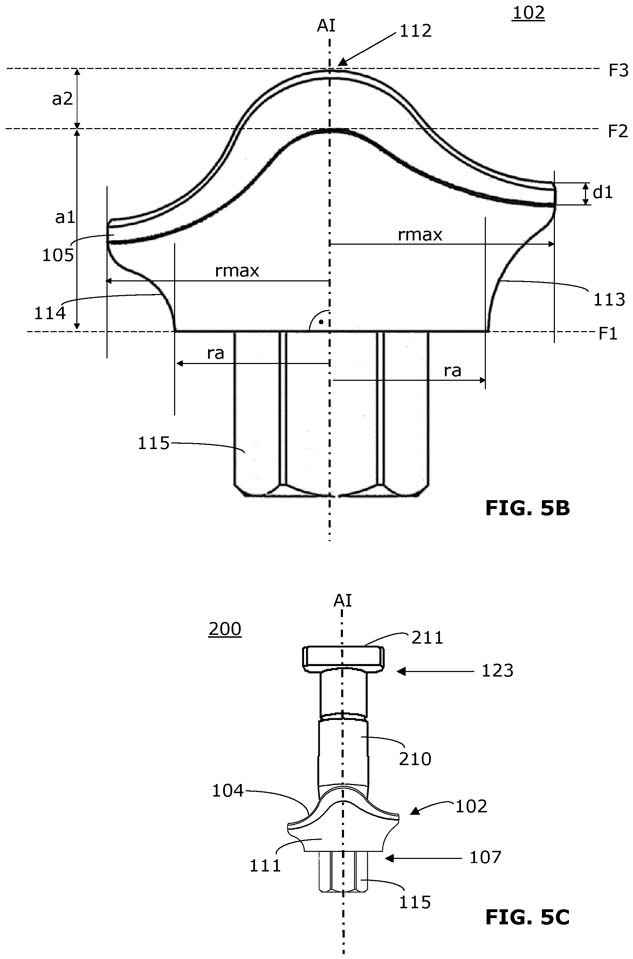

Gemäss Erfindung geht es um ein Abutmentsystem 200 (siehe z.B. Fig. 5C), das primär zur Verwendung im Bereich der vorderen Zähne und Prämolaren ausgelegt ist. Das Abutmentsystem 200 umfasst eine Abutmentbasis 102. Eine beispielhafte erste Abutmentbasis 102 ist in den Figuren 5A bis 5D gezeigt. Die Abutmentbasis 102 weist eine erste Schnittstelle 107 auf, die zum Aufsetzen auf ein Implantat 103 ausgelegt ist, wie z.B. in Fig. 5A angedeutet. Das Implantat 103 definiert nach dem Inserieren durch die Lage seiner Implantatachse AI die Lage aller weiteren Elemente (wie Abutmentbasis 103, Prothetikpfosten 210 und Restaurationselemente), die an bzw. auf dem Implantat 103 befestigt werden, wie in Fig. 5C angedeutet. Zusätzlich zu der ersten Schnittstelle 107 umfasst das Abutmentsystem 200 eine zweite Schnittstelle 123 zum Befestigen des/der Restaurationselemente (z.B. eine Krone oder Suprakonstruktion).

Die Abutmentbasis 102 weist bei allen Ausführungsformen der Erfindung eine skalopierte Oberseite 104 auf und sie hat eine drei-dimensionale Form, die nicht symmetrisch zu der Implantatachse AI ausgelegt ist. Weiterhin ist die Abutmentbasis 102 von einem Mantelbereich 111 umgeben, der im Vertikalschnitt betrachtet eine konkave Form aufweist. Diese konkave Form des Mantelbereichs 111 kann man zum Beispiel in den Figuren 5A und 5B gut erkennen.

Zusätzlich umfasst das Abutmentsystem 200 bei allen Ausführungsformen einen separaten Prothetikpfosten 210, der im Bereich der skalopierten Oberseite 104 der Abutmentbasis 102 so befestigbar ist, dass sich der Prothetikpfosten 210 im befestigten Zustand koaxial zu der Implantatachse AI erstreckt. Ein beispielhaftes Abutmentsystem 200 mit Abutmentbasis 102 und Prothetikpfosten 210 ist in Fig. 5C gezeigt.

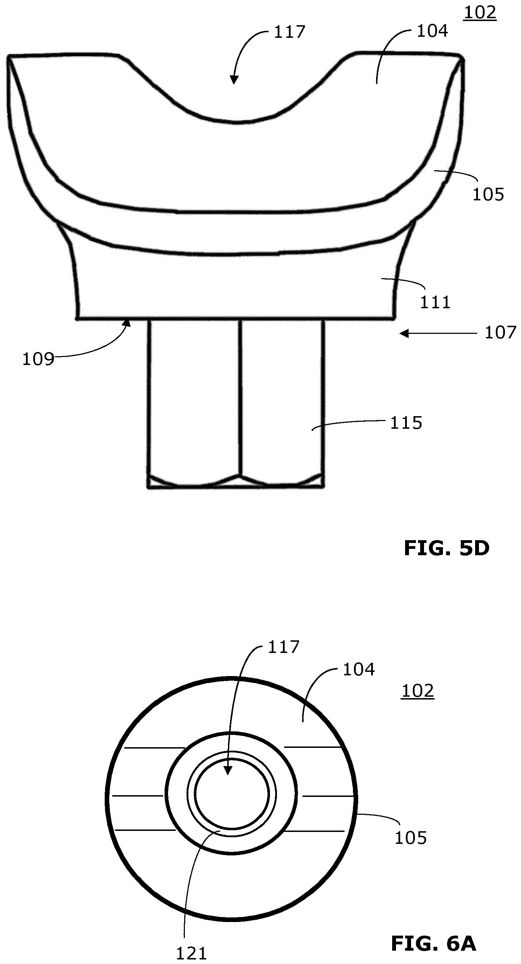

Die Abutmentbasis 102 weist vorzugsweise bei allen Ausführungsformen eine proximale Schnittstellenfläche 109 im Bereich der ersten Schnittstelle 107 auf, die im Wesentlichen eben ist und senkrecht zu der Implantatachse AI steht. Ausserdem umfasst die Abutmentbasis 102 vorzugsweise bei allen Ausführungsformen ein Durchgangsloch 117 im Bereich der skalopierten Oberfläche 104, das zum Befestigen des Prothetikpfostens 210 und/oder zum Verbinden mit dem Implantat 103 dient. In Fig. 5D kann man die Position des Durchgangsloches 117 andeutungsweise erkennen. In Fig. 6A ist das Durchgangsloch 117 einer anderen erfindungsgemässen Abutmentbasis 102 in einer Draufsicht zu sehen.

Gemäss Erfindung ist die Querschnittsform (im Vertikalschnitt durch die Abutmentbasen 102) asymmetrisch, wie im Folgenden dargelegt wird.

Bei einem Frontzahn FZ zum Beispiel kann das Schmelzzementgrenzniveau SZGN2 auf der rechten und linken Seite (d.h. interdental) des Zahnes FZ: 11 in etwa auf der gleichen Höhe liegen, wie in Fig. 1C angedeutet. An der Zahnfront (in Fig. 1B links) und der Zahnrückseite (in Fig. 1B rechts) folgt der Verlauf der Schmelzzementgrenze SZG (bei gesundem Zahnfleisch) mehr oder weniger der geschwungenen Kontur des Zahnfleischs 9, das eine Manschette um den Zahn bildet. In Fig. 1B ist der Verlauf der Schmelzzementgrenze SZG durch eine nach oben bauchig ausgebildete Kurve dargestellt. Der Verlauf des Knochenniveaus ist in der Seitenansicht von Fig. 1B durch eine weitere nach oben bauchig ausgebildete Kurve in strichlierter Form dargestellt, wobei das Maximum dieser Kurve als Knochenniveau KN2 bezeichnet ist. In Fig. 1C ist der Verlauf der Schmelzzementgrenze SZG durch eine nach unten bauchig ausgebildete Kurve dargestellt. Der Verlauf des Knochenniveaus ist in der Ansicht von Fig. 1C durch eine weitere nach unten bauchig ausgebildete Kurve in strichlierter Form dargestellt, wobei das Minimum dieser Kurve als Knochenniveau KN1 bezeichnet ist. Bei der schematisierten Darstellung in Fig. 1B liegt das Schmelzzementgrenzniveau SZGN1 der einfacheren Darstellung wegen auf der Vorder- und Rückseite des Zahnes FZ: 11 auf gleichem Niveau. D.h. die Linie, die das Schmelzzementgrenzniveau SZGN1 abbildet, verläuft hier horizontal. Das Schmelzzementgrenzniveau SZGN1 und die Kontur des Zahnfleischs 9 liegen jedoch typischerweise an der Zahnfront auf einer anderen Höhe als an der Zahnrückseite, d.h. die Linie, die das Schmelzzementgrenzniveau SZGN1 abbildet, verläuft in der Praxis meist schräg. In Fig. 5A ist der schräge Verlauf des Schmelzzementgrenzniveaus SZGN1 anhand eine strichlierten Hilfslinie beispielhaft dargestellt. Entsprechend unterscheidet sich an der Abutmentbasis 102 der Erfindung das Niveau NA (A steht für Aussen = vestibulär) von dem Niveau NI (I steht für Innen = oral), wie in Fig. 5A zu erkennen ist. Daraus ergeben sich eine Asymmetrie der Querschnittsform und eine speziell gerichtete Orientierung (Winkelstellung), die beim Befestigen der Abutmentbasis 102 auf dem Implantat 103 berücksichtigt werden muss.

In Fig. 5A ist anhand des ersten Abutments 102 die Asymmetrie der Querschnittsform zu erkennen, wobei anzumerken ist, dass Fig. 5A keine Schnittansicht sondern eine Seitenansicht zeigt. In den Figuren 5A bis 5C ist die Abutmentbasis 102 in der gleichen Orientierung gezeigt wie der Zahn FZ: 11 in Fig. 1B.

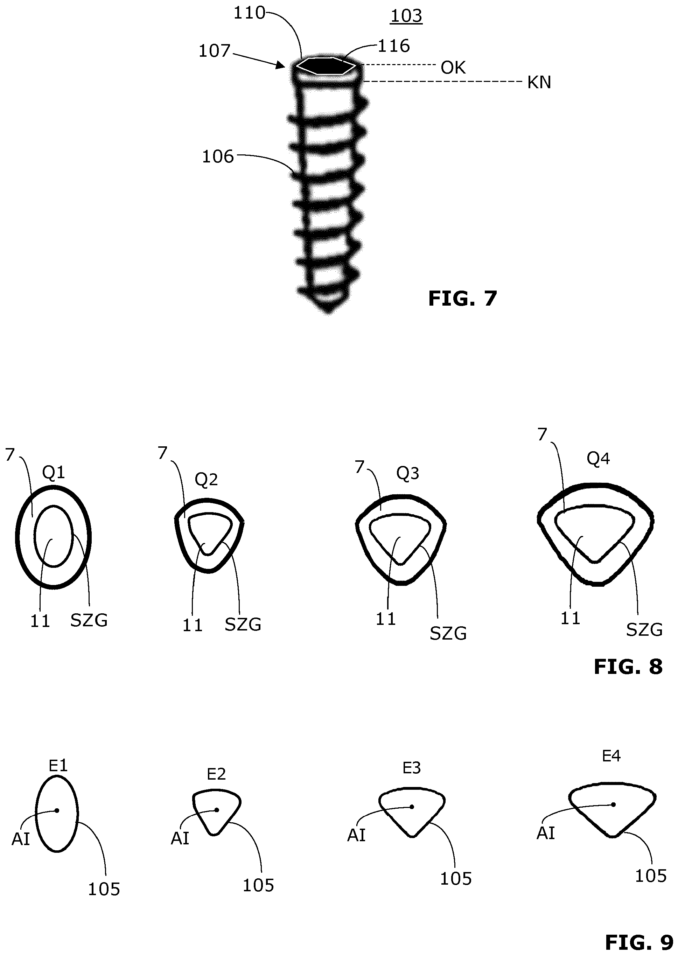

In Fig. 2B ist andeutungsweise zu erkennen, dass jeder Zahn einen anderen typischen Querschnitt bzw. Grundriss aufweist. Die Prämolaren PM (z.B. die Zähne PM:14 und PM:15 gemäss FDI-Schema) haben typischerweise einen ovalen Grundriss (z.B. analog zur Grundrissform Q1 in Fig. 8), die Eckzähne EZ (z.B. der Zahn EZ: 13 gemäss FDI-Schema) haben typischerweise einen deltoiden Querschnitt mit gerundeten Ecken (z.B. analog zur Grundrissform Q2 in Fig. 8) und die Frontzähne (z.B. die Zähne FZ: 11 und FZ: 12 gemäss FDI-Schema) haben typischerweise auch einen deltoiden Querschnitt mit gerundeten Ecken (z.B. analog zu den Grundrissformen Q3 und Q4 in Fig. 8).

Untersuchungen haben ergeben, dass die Formenvielfalt und die Variationen in Sachen Formen- und Grössenunterschied bei den Frontzähnen und Prämolaren nur recht klein sind. Daher ist es gemäss Erfindung möglich drei oder vier industriell gefertigte Abutmentbasen 102 (wie in Fig. 9 angedeutet) anzubieten, um in nahezu allen Fällen einen Ersatz für einen menschlichen Frontzahn FZ oder Prämolaren PM erstellen zu können.

In der Draufsicht betrachtet haben die entsprechenden Abutmentbasen 102 der Erfindung in etwa die Kontur und Dimension der Schmelzzementgrenze SZG der entsprechenden Formen Q1, Q2, Q3 und Q4, wie schematisch in Fig. 8 gezeigt. In Fig. 9 sind vier mögliche Grundrissformen und -grössen (in die Zeichnungsebene projiziert) der Abutmentbasen 102 in schematisierter Form gezeigt und mit E1 bis E4 bezeichnet. Bei der Grundrissform E1 handelt es sich um eine ovale oder leicht ovoide Form. Eine Abutmentbasis 102 nach der Grundrissform E1 hat vorzugsweise eine Grösse von 4,5 mm mal 6 mm und eignet sich zum Aufbau eines Zahnersatzes eines Prämolaren. Bei den Grundrissformen E2, E3 und E4 handelt es sich um deltoide Formen. Eine Abutmentbasis 102 nach der Grundrissform E2 hat vorzugsweise einen Durchmesser von 4 mm, eine Abutmentbasis 102 nach der Grundrissform E3 hat vorzugsweise einen Durchmesser von 5 mm und eine Abutmentbasis 102 nach der Grundrissform E4 hat vorzugsweise einen Durchmesser von 6 mm. Die Grundrissformen E2, E3 und E4 eignen sich vor allem zum Aufbau eines Zahnersatzes eines Eck- oder Frontzahnes. In der Draufsicht bzw. in der Projektion in die Zeichenebene betrachtet, definiert die umlaufende Kante/Schulter 105 die Grundrissformen E1 - E4. Keine der Grundrissformen E1, E2, E3, E4 ist rotationssymmetrisch in Bezug zur Implantatachse AI, die in Fig. 9 jeweils senkrecht auf der Zeichnungsebene steht.

Es kann zum Beispiel anhand einer lokalen Untersuchung des Extraktionskanals und/oder des extrahierten Zahns und/oder mittels bildgebender Verfahren ermittelt werden, welcher Typ und welche Grösse der erfindungsgemässen Abutmentbasis 102 geeignet ist, um einen Zahnersatz aufzubauen. Beim Auswählen des Typs und der Grösse der Abutmentbasis 102 wird vorzugsweise auch die Lage und Dicke des Bindegewebes 6 oberhalb des Kieferknochens 5 (aus crestaler Richtung betrachtet) ermittelt (siehe Fig. 1B und Fig. 1C). Dabei können Werte für die Dicke bzw. Lage des Bindegewebes 6 mesial (zur Kiefer-Mittellinie hin), distal (von der Kiefer-Mittellinie entfernt), vestibulär (nach außen hin) und palatinal (zum Gaumen hinweisend) berücksichtig werden.

Die Erfindung setzt nicht auf patientenindividuell angefertigte Abutmentbasen, sondern auf Abutmentbasen 102, die konfektionell gefertigt sind. Um trotzdem jeweils optimierte Lösungen zu ermöglichen, umfasst ein Implantatsystem 100 vorzugsweise bei allen Ausführungsformen verschiedene (vorzugsweise mindestens drei) Abutmentbasen 102 mit den Formen E1, E2, E3 und E4 (siehe Fig. 9), damit der Operateur jeweils eine geeignete Abutmentbasis 102 zur Hand hat, deren Form und Grösse annähernd der lokalen Situation nach der Extraktion eines Zahnes entspricht.

Ein solches Implantatsystem 100 umfasst vorzugsweise bei allen Ausführungsformen mindestens eine Abutmentbasis 102, die im Horizontalschnitt betrachtet eine elliptische Grundrissform analog zu E1 mindestens eine Abutmentbasis 102 und mindestens eine rundlich-deltoide Grundrissform analog zu E2 und/oder E3 und/oder E4.

Die Grundrissformen E1 - E4 der Abutmentbasen 102 sind dabei an die Grundrissformen Q1 - Q4 eines mit einem Zahnersatz-Implantat 100 zu ersetzenden Frontzahns FZ, Eckzahns EZ, oder prämolaren Zahns PM angepasst.

Von unten nach oben betrachtet weist eine Abutmentbasis 102 der Erfindung bei allen Ausführungsformen mindestens die folgenden Charakteristika auf:
- Eine erste Schnittstelle 107; Vorzugsweise befindet sich hier eine proximale Schnittstellenfläche 109, die im montierten Zustand parallel (Fläche an Fläche) zu einer distalen Oberseite 110 des Implantats 103 verläuft. Die Schnittstellenfläche 109 liegt senkrecht zur Implantatachse AI und ist im Wesentlichen eben. Vorzugsweise befindet sich hier auch ein Verbindungspfosten für ein interne oder externe Implantatverbindung 115, wie in Fig. 5A andeutungsweise und beispielhaft gezeigt.
- Einen konkaven Mantelbereich 111, der einen harmonischen (kantenfreien) Übergang schafft von der Schnittstellenfläche 109 zu einer umlaufenden Kante/Schulter 105. In Fig. 5A ist die Fläche des Mantelbereichs 111 schraffiert, um sie optisch hervor zu heben.
- Eine umlaufenden Kante/Schulter 105, die in der Projektion in eine Ebene, die senkrecht steht zur Zeichenebene der Fig. 5A, einer der Grundrissformen E1, E2, E3 oder E4 der Fig. 9 entspricht oder angenähert ist. Die umlaufende Kante/Schulter 105 hat in der interdentalen Seitenansicht den in Fig. 5A gezeigten skalopierten Verlauf, wobei das Niveau NA (A steht für Aussen) unterschiedlich sein kann von dem Niveau NI (I steht für Innen). Auf der palatinalen und/oder vestibulären Seite hat die umlaufende Kante/Schulter 105 eine nach unten gewölbte Bogenform, wie in Fig. 5D zu erkennen ist.
- Eine distale, skalopierte Oberfläche 104, die in der Projektion in eine Ebene, die senkrecht steht zur Zeichenebene der Fig. 5A, einer der Grundrissformen E1, E2, E3 oder E4 der Fig. 9 entspricht oder angenähert ist.

In Fig. 5B sind Hilfslinien und Angaben zu erkennen, die es erlauben die Form und Dimension der Abutmentbasis 102 besser zu beschreiben. Die Schnittstellenfläche 109 liegt in einer Ebene F1, die senkrecht steht zur Implantatachse AI. Der Abstand a1 (parallel zur Implantatachse AI) zwischen der Ebene F1 und der Ebene F2 beträgt je nach Abutmentbasis 102 vorzugsweise bei allen Ausführungsformen zwischen 2 mm und 8 mm. Der Abstand a2 (parallel zur Implantatachse AI) zwischen der Ebene F2 und der Ebene F3 beträgt je nach Abutmentbasis 102 vorzugsweise bei allen Ausführungsformen zwischen 0,3 mm und 5 mm. Die umlaufenden Kante/Schulter 105 hat vorzugsweise im palatinalen und vestibulären Bereich des Abutments 102 eine Dicke d1 (parallel zur Implantatachse AI), die zwischen 0,1 mm und 0,6 mm beträgt. Im Bereich des Apex 112 der Abutmentbasis 102 entspricht die Dicke der umlaufenden Kante/Schulter 105 dem erwähnten Abstand a2.

Der radiale Achsabstand ra zwischen der Implantatachse AI und dem äußersten Umfang der Schnittstellenfläche 109 beträgt vorzugsweise bei allen Ausführungsformen zwischen 1,5 mm und 3 mm. Es ist zu beachten dass die Schnittstellenfläche 109 bei allen Ausführungsformen vorzugsweise kreisförmig ausgebildet ist und konzentrisch zur Implantatachse AI liegt.

Der maximale radiale Achsabstand rmax zwischen der Implantatachse AI und dem Aussenumfang der Kante/Schulter 105 beträgt vorzugsweise bei allen Ausführungsformen zwischen 2 mm und 5 mm. Es ist zu beachten, dass die Implantatachse AI vorzugsweise im Zentrum der ovoiden oder deltoiden Formen E1, E2, E3, E4 liegt.

Vorzugsweise haben alle Abutmentbasen 102 der Erfindung eine Gesamthöhe a1+a2, die maximal 10 mm beträgt. Typischerweise ist die Gesamthöhe a1+a2 sogar kleiner als 6 mm.

Vorzugsweise haben alle Abutmentbasen 102 der Erfindung einen Maximaldurchmesser, der maximal 10 mm beträgt. Typischerweise ist der Maximaldurchmesser kleiner gleich 6 mm.

Der beschriebene konkave Mantelbereich 111 sorgt bei allen Ausführungsformen für einen fliessenden (d.h. stufenlosen) Übergang zwischen der rotationssymmetrischen Schnittstellenfläche 109 und der nicht-symmetrischen, umlaufenden Kante/Schulter 105 bzw. der nicht-symmetrischen, skalopierten Oberfläche 104.

In Fig. 5A und 5B kann man in der Seitenansicht erkennen, dass der Querschnitt asymmetrisch zur Implantatachse AI ausgelegt ist, d.h. derjenige Teil der Abutmentbasis 102, der rechts der Implantatachse AI liegt ist nicht spiegelsymmetrisch zu demjenigen Teil der Abutmentbasis 102, der links der Implantatachse AI liegt. Die Konkavität auf der vestibulären Seite (Kurve 114) und die Konkavität auf der palatinalen Seite (Kurve 113) sind deutlich unterschiedlich.

Der Apex 112 der Abutmentbasen 102 der Erfindung muss nicht bei allen Ausführungsformen unbedingt auf der Implantatachse AI liegen, wie dies bei dem in Fig. 5A und Fig. 5B gezeigtem Beispiel der Fall ist.

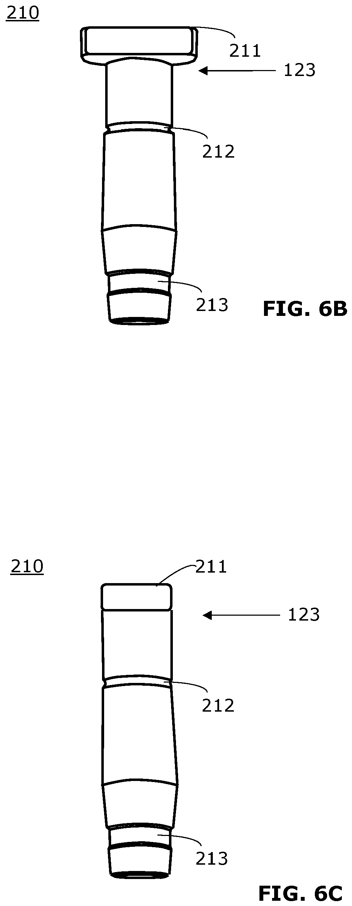

Die Fig. 5C zeigt eine verkleinerte Seitenansicht der ersten Abutmentbasis 102 nach Fig. 5A zusammen mit einem aufgesetzten Prothetikpfosten 210, der koaxial zu der Implantatachse AI mit der Abutmentbasis 102 verbunden (z.B. verschraubt) ist. Der Prothetikpfosten 210 weist eine Schnittstelle (hier zweite Schnittstelle 123 genannt) auf, die zum Befestigen/Anbringen einer Krone 122 oder einer Suprakonstruktion dient. So kann hier am Prothetikpfosten 210 zum Beispiel ein Kopf oder eine Platte 211 vorgesehen sein, wie in den Figuren 5C, 6B und 6D zu erkennen ist. In Fig. 6B ist zu erkennen, dass der Kopf oder die Platte 211 über den Durchmesser des Prothetikpfostens 210 hinaus ragen kann. Seitlich können der Kopf oder die Platte 211 abgeflacht sein, wie in Fig. 6C ersichtlich ist. An dem Prothetikpfosten 210 können umlaufende Nuten 212, 213 vorgesehen sein, um den Prothetikpfosten 210 einklemmen oder festschrauben (z.B. mit einer Madeschraube) zu können.

Vorzugsweise umfassen alle Ausführungsformen der Abutmentbasen 102 einen Verbindungspfosten für ein interne oder eine Aufnahmeöffnung für eine externe Implantatverbindung 115, der in den Figuren 5A, 5B, 5C und 5D zu erkennen ist. Der Verbindungspfosten kann polygonal und/oder rotationssymmetrisch konisch sein. Dieser Verbindungspfosten 115 bzw. die Aufnahmeöffnung dient als Schnittstelle zum Implantat 103. Falls ein solcher Verbindungspfosten 115 an der Abutmentbasis 102 vorgesehen ist, weist das Implantat 103 eine korrespondierende, entsprechend ausgebildete Aufnahmeöffnung 116 (interne Verbindung) auf. In Fig. 7 ist diese Aufnahmeöffnung 116 als schwarz dargestelltes Sechseck rein schematisch angedeutet. In Fig. 5A ist diese Aufnahmeöffnung 116 strichliert gezeigt.

Es gibt bereits zahlreiche verschiedene (Standard-)Schnittstellen 107, die es erlauben eine Abutmentbasis 102 mit einem Implantat 103 zu verbinden. Die meisten der heute eingesetzten Schnittstellen haben eine sogenannte hexagonale Schnittstelle und werden, je nach Konstellation, als interne Hex-Schnittstelle (wie in den Figuren 5A, 5B und 6A gezeigt), externe Hex-Schnittstelle, Standard-Hex-Schnittstelle, schlanke Hex-Schnittstelle, weite Hex-Schnittstelle usw. bezeichnet.

Gängige Schnittstellen sind zum Beispiel aus den Dokumenten US 4,960,381, US 5,407,359, US 5,209,666 und US 5,110,292 bekannt. Diese vorbekannten Lösungen können im Zusammenhang mit der vorliegenden Erfindung bei allen Ausführungsformen zur Anwendung kommen.

Nachdem ein geeignetes Abutment 102 gewählt wurde, wird dieses so mit dem Implantat 103 verbunden, dass die asymmetrisch entlang des Abutments 102 umlaufende Kante/Schulter 105 möglichst in alle Richtungen (mesial, distal, vestibulär und palatinal) einen in etwa gleichen Abstand zum Kieferknochen 5 oder eine gleichmässige Lage in Bezug zum Bindegewebe 6 hat.

Die Abutmentbasis 102 hat vorzugsweise bei allen Ausführungsformen eine ausgeprägte umlaufende Kante/Schulter 105, wie z.B. in Fig. 5A zu erkennen ist. Die umlaufende Kante/Schulter 105 folgt in etwa dem Bereich des grössten Durchmessers/Umfangs der Abutmentbasis 102 in der Horizontalen betrachtet.

Die Abutmentbasis 102 der Erfindung ist in etwa der asymmetrisch skalopierten Form und dem Verlauf der Schmelzzementgrenze SZG angenähert. Daher hat die Abutmentbasis 102 auch eine asymmetrisch skalopierte Form und die Abutmentbasis 102 wird so mit dem Implantat 103 verbunden, dass die Lage der skalopierten Oberfläche 104 der Abutmentbasis 102 im Wesentlichen der Lage der Schmelzzementgrenze SZG des Zahnes vor der Extraktion entspricht. Aus diesem Grund ist die Winkelstellung (Indexierungsposition) der Abutmentbasis 102 in Bezug zu dem Implantat 103 wichtig. Die (Hex-) Schnittstelle 107 spielt daher eine wichtige Rolle, da sie ein Verdrehen der Abutmentbasis 102 um die Implantatachse AI herum relativ zum fest implantierten Implantat 103 ermöglicht.

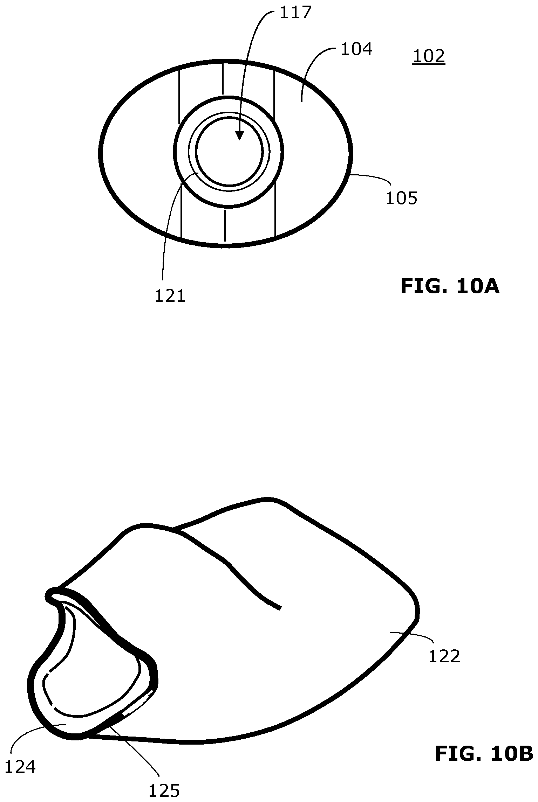

Nachdem die Abutmentbasis 102 in der richtigen Winkelstellung (Indexierungsposition) auf das Implantat 103 gesetzt und mit diesem (z.B. durch einen Gewindestift oder eine Schraube 120, wie in Fig. 5A gezeigt) verbunden wurde, kann eine temporäre Krone z.B. unter Einsatz eines bekannten Klebstoffs oder Zements auf der Abutmentbasis 102 befestigt werden, bis eine endgültige Krone 122 (siehe Fig. 10B) verfügbar ist. Vorzugsweise kommt zum Befestigen der Krone 122 oder einer Suprakonstruktion der erwähnte Prothetikpfosten 210 zum Einsatz. Diese Schritte sind hinlänglich bekannt und werden daher nicht weiter ausgeführt.

Um das Verbinden der Abutmentbasis 102 mit dem Implantat 103 zu ermöglichen, weisen die Abutmentbasis 102 vorzugsweise ein Durchgangsloch 117 und das Implantat 103 vorzugsweise ein Schraubenloch 118 mit Innengewinde auf, wie in Fig. 5A schematisch anhand eines Beispiels angedeutet. Das Durchgangsloch 117 und das Schraubenloch 118 verlaufen koaxial zu der Implantatachse AI. So kann ein Gewindestift oder eine Schraube 120 von oben her durch das Abutment 102 hindurch in das Schraubenloch 118 geschraubt werden, um das Abutment 102 an dem Implantat 103 zu befestigen. Das Durchgangsloch 117 hat vorzugsweise einen innen liegenden Kragen oder eine Umfangsreduzierung 121, damit ein Schraubenkopf 119 der Schraube 120 aufliegen kann. Diese Art der Verbindung der Abutmentbasis 102 mit dem Implantat 103 kann bei allen Ausführungsformen zur Anwendung kommen. Es gibt aber auch andere bekannte Ansätze, die angewendet werden können. Wichtig ist, dass der Prothetikpfosten 210 von oben her in die Abutmentbasis 102 eingesetzt und dort befestigt werden kann.

Bei den entsprechend ausgeführten Implantatsystemen 100 ist das Durchgangsloch 117 in der Draufsicht auf die skalopierte Oberfläche 104 der Abutmentbasis 102 zu erkennen, wie in den Figuren 6A und 10A gezeigt. Auch in der Seitenansicht der Abutmentbasis 102 (siehe Fig. 5D) kann das Durchgangsloch 117, je nach Orientierung, zu erkennen sein.

In Fig. 6A ist eine Draufsicht auf eine Abutmentbasis 102 gezeigt, die eine leicht deltoide Form hat. In der Draufsicht sind sowohl das Durchgangsloch 117 als auch der Kragen bzw. die Umfangsreduzierung 121 zu erkennen. In Fig. 10A hingegen ist eine Draufsicht auf eine Abutmentbasis 102 gezeigt, die eine ovoide Form hat. In der Draufsicht sind sowohl das Durchgangsloch 117 als auch der Kragen bzw. die Umfangsreduzierung 121 zu erkennen.

Vorzugsweise wird das erfindungsgemässe Implantatsystem 100, das mindestens eine Abutmentbasis 102, das (Standard-)Implantat 103 und den Prothetikpfosten 210 umfasst, kurz nach der Extraktion eines Zahnes (z.B. eine Frontzahnes FZ) implantiert, um die umgebenden Gewebe- und Knochenstrukturen nicht dauerhaft zu "stören". Dabei wird darauf geachtet, dass die Einheit aus Implantat 103 und Abutmentbasis 102 im Gegensatz zur Lehrmeinung so im Knochen fixiert wird, dass die skalopierte Fläche 104 der Abutmentbasis 102 ca. 1,5 mm supracrestal zu liegen kommt. In Fig. 7 ist ein beispielhaftes Standardimplantat 103 mit konisch geformtem Grundkörper gezeigt, wobei das Implantat 103 ein Aussengewinde 106 und eine mechanische Schnittstelle 107 zum Verbinden mit der Abutmentbasis 102 der Erfindung umfasst.

Das Implantat 103 kann bei allen Ausführungsformen entweder einen parallelwandigen oder einen konischen (wurzelförmigen) Grundkörper aufweisen. In Fig. 5A ist durch gestrichelte Linien ein Implantat 103 mit parallelwandigem Grundkörper angedeutet. In Fig. 7 ist hingegen ein Implantat 103 mit konischem Grundkörper schematisch dargestellt. Beim Einbringen der notwendigen Bohrung im Kieferknochen 5 muss der Typ/die Form des Implantats 103 entsprechend berücksichtigt werden.

Es kann auch temporär ein Abdruckpfosten auf die Abutmentbasis 102 aufgeschraubt/aufgesteckt werden, der im Mund des Patienten dem negativen, kauflächigen Profil des Abutments (Profil in der Aufsicht) im weitesten Sinne entspricht. Es kann jedoch auch der Prothetikpfosten als Abdruckpfosten dienen. Wichtig ist, dass der Sitz des Abdruckpfostens in der 3-dimensionalen Betrachtung in Bezug zur Abutmentbasis 102 genau definiert ist.

Die Abutmentbasis 102 umfasst bei allen Ausführungsformen ein biokompatibles Material, vorzugsweise Titan, eine Titanlegierung und Zirkonoxid, oder deren Kombinationen, und kann, auf Wunsch, z.B. mit Titan-Zirkonoxidkeramik und/oder Titan-Niob-Oxidnitridkeramik beschichtet sein. Die Oberfläche der Abutmentbasis 102 kann aber auch poliert, maschiniert, geätzt oder gelasert oder mit bioaktiven Materialien beschichtet sein. Je nach Bedarf kann die Oberflächenmorphologie so ausgelegt werden, dass die Anlagerung von Weichgewebe (zelluläre und oder faserige Elemente) unterstützt wird.

Vorzugsweise kommt bei allen Ausführungsformen ein Implantat 103 zum Einsatz, das im Bereich der Schnittstelle 107 eine angefaste Kante 108 hat, die 360 Grad umläuft. In Fig. 5A ist ein Implantat 103 mit Fase 108 an der distalen Oberseite 110 angedeutet. Die Oberseite 110 des Implantats 103 ist in diesen Fällen nicht komplett eben.

Ein Implantatsystem 100 mit einem solchen Implantat 103 mit Fase 108 und einem oder mehreren Abutmentbasen 102, ist gegenüber bisherigen Implantatlösungen besonders vorteilhaft, zumal sich eine taillierte Gesamtkonstellation aufgrund der Fase 108 und der speziell konkav geformten Mantelfläche 111 ergibt.

In Fig. 10A ist eine stark schematisierte Draufsicht einer weiteren Abutmentbasis 102 der Erfindung gezeigt, die hier einen ovalen Grundriss aufweist. Fig. 10B zeigt eine schematisierte Perspektivansicht einer Krone 122, die zum Befestigen auf der Abutmentbasis 102 nach Fig. 10A ausgelegt wurde. In Fig. 10B liegt die Krone 122 mit der Zahnvorderseite (Zahnfront) auf einer Unterlage. Die Rückseite der Krone 122 ist in Fig. 10B sichtbar. Man kann erkennen, dass die Krone 122 eine komplementäre Innenform 124 aufweist, die genau an die Form und Dimension der Abutmentbasis 102 nach Fig. 10A angepasst ist. Die Krone 122 hat einen umlaufenden Rand 125, der in etwa der Form der umlaufenden Kante/Schulter 105 der Abutmentbasis 102 entspricht. Beim Befestigen der Krone 122 auf der Abutmentbasis 102 sitzt die skalopierte Oberseite 104 der Abutmentbasis 102 im Inneren der Krone 122 und der umlaufenden Rand 125 sitzt bündig auf der umlaufenden Kante/Schulter 105 der Abutmentbasis 102.

**Bezugszeichen:**

| | |
|---|---|
| Implantat (pfostenförmiger Abschnitt) | 1 |
| Abutment | 2 |
| flache Oberfläche | 3 |
| skalopierte Oberfläche | 4 |
| Kieferknochen | 5 |
| Bindegewebe | 6 |
| Zahnschmelz | 7 |
| Nerv | 8 |
| Zahnfleisch (Epithel) | 9 |
| Zahnersatz- Implantat | 10 |
| Zahnbein (Dentin) | 11 |
| Zahnwurzel | 12 |
| Paradont | 13 |
| Kollagenfasern | 14 |
| interdentale faziale Papille | 15 |
| | |
| Schneidezähne | FZ: 11, FZ: 12 |
| Schneidezähne | FZ: 21, FZ: 22 |
| Eckzähne | EZ: 13, EZ: 23 |
| Prämolare | PM: 14, PM: 15 |
| Prämolare | PM: 24, PM: 25 |
| | |
| | |
| Implantatsystem (Zahnersatz-Implantat) | 100 |
| pfostenförmiger Abschnitt | 101 |
| Abutmentbasis | 102 |
| Implantat | 103 |
| skalopierte Oberfläche | 104 |
| umlaufende Kante/Schulter | 105 |
| Aussenqewinde | 106 |
| 1. Schnittstelle | 107 |
| Fase / Umfanqsreduzierunq | 108 |
| Schnittstellenfläche | 109 |
| Oberseite | 110 |
| konkaver Mantelbereich | 111 |
| Apex | 112 |
| Kurve | 113 |
| Kurve | 114 |
| Verbindungspfosten / Implantatverbindung | 115 |
| Aufnahmeöffnung | 116 |
| Durchgangsloch | 117 |
| Schraubenloch | 118 |
| Schraubenkopf | 119 |
| Gewindestift oder Schraube | 120 |
| Kragen oder Umfanqsreduzierunq | 121 |
| Krone | 122 |
| 2. Schnittstelle | 123 |
| komplementäre Innenform | 124 |
| umlaufender Rand | 125 |
| | |
| Abutmentsystem | 200 |
| | |
| Prothetikpfosten | 210 |
| Kopf oder Platte | 211 |
| Nut | 212 |
| Nut | 213 |
| | |
| Abstand | a1 |
| Implantatachse | AI |
| Backenzahn | BZ |
| Dicke | d1 |
| Grundrisse (in Projektion) | E1, E2, E3, E4 |
| Eckzahn | EZ |
| Ebenen | F1, F2, F3 |
| Knochenniveau | KN1, KN2 |
| Niveau Innen (oral) | NI |
| Niveau Aussen (vestibulär) | NA |
| Oberkante | OK |
| Prämolar | PM |
| Querschnitte | Q1, Q2, Q3, Q4 |
| Schneidezahn | FZ |
| Schmelzzementqrenze | SZG |
| Schmelzzementgrenzniveau | SZGN1; SZGN2 |

## Patentansprüche

1. Abutmentsystem (200) zur Verwendung im Bereich der vorderen Zähne und Prämolaren mit einer Abutmentbasis (102), die eine erste Schnittstelle (107), welche eine im Wesentlichen ebene proximale Schnittstellenfläche (109) aufweist, zum Aufsetzen auf ein Implantat (103) und eine zweite Schnittstelle zum Befestigen eines Prothetikelements umfasst, wobei die Abutmentbasis (102) eine drei-dimensionale Form hat, die nicht symmetrisch zu einer Achse ausgelegt ist, die konzentrisch und rechtwinkelig zu der Schnittstellenfläche (109) ist, und das Abutmentsystem (200) einen separaten Prothetikpfosten (210) umfasst, der im Bereich einer Oberseite (104) der Abutmentbasis (102) befestigbar ist, wobei sich der Prothetikpfosten (210) im befestigten Zustand koaxial zu der Achse erstreckt, wobei die Oberseite der Abutmentbasis (102) in der interdentalen Seitenansicht ein vestibuläres Niveau (NA) und ein unterschiedliches orales Niveau (NI) aufweist, **dadurch gekennzeichnet, dass** die Oberseite (104) der Abutmentbasis (102) eine skalopierte Oberseite (104) mit einem Apex (112) und einer nicht symmetrischen umlaufenden Kante/Schulter (105) ist,
und die Abutmentbasis (102) einen Mantelbereich (111) hat, der im Vertikalschnitt betrachtet eine konkave Form (113, 114) aufweist.

2. Abutmentsystem (200) nach Anspruch 1, **dadurch gekennzeichnet, dass** der Mantelbereich (111), der im Vertikalschnitt betrachtet eine konkave Form (113, 114) aufweist, einen kantenfreien Übergang schafft von der im Wesentlichen ebenen proximalen Schnittstellenfläche (109) zu der umlaufenden Kante/Schulter (105).

3. Abutmentsystem (200) nach Anspruch 1, **dadurch gekennzeichnet, dass** die umlaufende Kante/Schulter (105) in der interdentalen Seitenansicht einen skalopierten Verlauf hat.

4. Abutmentsystem (200) nach Anspruch 1, **dadurch gekennzeichnet, dass** die Abutmentbasis (102) aufweist:
- ein Durchgangsloch (117) im Bereich der skalopierten Oberfläche (104) zum Befestigen des Prothetikpfostens (210), wobei sich das Durchgangsloch (117) im Wesentlichen parallel, vorzugsweise koaxial, zu der Achse erstreckt.

5. Abutmentsystem (200) nach Anspruch 1 oder 4, **dadurch gekennzeichnet, dass** die Abutmentbasis (102) im Horizontalschnitt betrachtet eine elliptische Grundrissform (E1) oder eine rundlich-deltoide Grundrissform (E2, E3, E4) aufweist.

6. Abutmentsystem (200) nach einem der vorausgehenden Ansprüche 1, 4, oder 5, **dadurch gekennzeichnet, dass** die erste Schnittstelle (107) zum verdrehfesten Aufsetzen der Abutmentbasis (102) auf das Implantatelement (103) in mindestens drei verschiedenen Indexierungspositionen in Bezug zu der Achse ausgelegt ist.

7. Abutmentsystem (200) nach Anspruch 6, **dadurch gekennzeichnet, dass** die Abutmentbasis (102) im Bereich der ersten Schnittstelle (107)
- einen Verbindungspfosten für eine interne Implantatverbindung (115), oder
- eine Aufnahmeöffnung für eine externe Implantatverbindung (115) umfasst.

8. Abutmentsystem (200) nach Anspruch 6, **dadurch gekennzeichnet, dass** die erste Schnittstelle (107) als Hex-Schnittstelle ausgelegt ist, die ein Aufsetzen der Abutmentbasis (102) auf das Implantatelement (103) in einer von sechs verschiedenen Indexierungspositionen in Bezug zu der Achse ermöglicht.

9. Abutmentsystem (200) nach einem der vorhergehenden Ansprüche, **dadurch gekennzeichnet, dass** der Prothetikpfosten (210) durch Einklemmen oder Festschrauben befestigbar ist, wobei insbesondere am Prothetikpfosten (210) umlaufende Nuten vorgesehen sind, um den Prothetikpfosten (210) einklemmen oder festschrauben zu können.

10. Zahnersatz-Implantat (100) mit einem Abutmentsystem (200) nach einem der vorausgehenden Ansprüche 1 bis 9 und mit einem Implantat (103), **dadurch gekennzeichnet, dass** das Implantat (103) einen pfostenförmigen Abschnitt (101) mit Aussengewinde umfasst, und dass das Implantat (103) separat von der Abutmentbasis (102) ausgeführt ist, wobei das Implantat (103) einen Grundkörper umfasst, der im Wesentlichen rotationssymmetrisch zu der zentralen Achse ausgelegt ist.

11. Zahnersatz-Implantat (100) nach Anspruch 10, **dadurch gekennzeichnet, dass** die Abutmentbasis (102) mit dem Implantat (103) verschraubbar ist.

12. Zahnersatz-Implantat (100) nach Anspruch 10, **dadurch gekennzeichnet, dass** das Implantat (103) eine Zentralbohrung (118) aufweist, die koaxial zur Achse verläuft und die mit einem Innengewinde zur Aufnahme eines Gewindestabs oder einer Schraube (120) versehen ist.

13. Zahnersatz-Implantat (100) nach Anspruch 10, **dadurch gekennzeichnet, dass** im Bereich der ersten Schnittstelle (107) an dem Implantat (103) und/oder an einer proximalen Schnittstellenfläche (109) der Abutmentbasis (102) eine umlaufende Fase (108) vorgesehen ist, um die Knochenanlagerung und/oder Weichteilanlagerung nach dem Implantieren zu fördern.

14. Zahnersatz-Implantat (100) nach einem der vorausgehenden Ansprüche 10 bis 13, **dadurch gekennzeichnet, dass** von einer proximalen Position zu einer distalen Position betrachtet, das Implantat (103) im Bereich einer distalen Oberseite (110) eine Umfangsreduzierung (108) aufweist, dass die Abutmentbasis (102) mit seiner proximalen Schnittstellenfläche (109) flächig auf der distalen Oberseite (110) des Implantats (103) aufsitzt, und dass unmittelbar oder in geringem Abstand zu der Umfangsreduzierung (108) der Mantelbereich (111) der Abutmentbasis (102) folgt, der im Vertikalschnitt betrachtet eine konkave Form (113, 114) aufweist.

15. Implantat-Satz, das mindestens zwei Abutmentbasen (102) und einen separaten Prothetikpfosten (210) umfasst, wobei jede Abutmentbasis des (102) Implantat-Satzes eine andere Grundrissform (E1, E2, E3, E4) und/oder Grösse aufweist und wobei mindestens eine der Abutmentbasen (102), eine erste Schnittstelle (107), welche eine im Wesentlichen ebene proximale Schnittstellenfläche (109) aufweist, zum Aufsetzen auf ein Implantat (103) und eine zweite Schnittstelle zum Befestigen eines Prothetikelements umfasst, wobei die mindestens eine Abutmentbasis (102) eine drei-dimensionale Form hat, die nicht symmetrisch zu einer Achse ausgelegt ist, die konzentrisch und rechtwinkelig zu der Schnittstellenfläche (109) ist, und wobei der separate Prothetikpfosten (210) im Bereich einer Oberseite (104) der mindestens einen Abutmentbasis (102) befestigbar ist, wobei sich der Prothetikpfosten (210) im befestigten Zustand koaxial zu der Achse erstreckt, **dadurch gekennzeichnet, dass**
- die Oberseite (104) der mindestens einen Abutmentbasis (102) eine skalopierte Oberseite (104) mit einem Apex (112) und einer umlaufenden Kante/Schulter (105) ist,
- die Oberseite der mindestens einen Abutmentbasis (102) in der interdentalen Seitenansicht ein erstes Niveau (NA) und ein unterschiedliches zweites Niveau (NI) aufweist, und
- die mindestens eine Abutmentbasis (102) einen Mantelbereich (111) hat, der im Vertikalschnitt betrachtet eine konkave Form (113, 114) aufweist.

## Claims

1. Abutment system (200) for use in the area of the front teeth and premolars, comprising an abutment base (102) having a first interface (107), which has a substantially planar proximal interface surface (109) for placement on an implant (103), and a second interface for attachment of a prosthetic element, wherein the abutment base (102) has a three-dimensional shape that is designed in a non-symmetrical manner relative to an axis that is concentric and at a right angle to the interface surface (109), and the abutment system (200) comprises a separate prosthetic post (210), which can be fixed in the region of an upper side (104) of the abutment base (102), wherein the prosthetic post (210) extends coaxially to the axis in the fixed state, wherein the upper side of the abutment base (102) has a vestibular level (NA) and a different oral level (NI) in the interdental side view, **characterized in that** the upper side (104) of the abutment base (102) is a scalloped upper side (104) having an apex (112) and a non-symmetrical circumferential edge/shoulder (105), and the abutment base (102) has a lateral region (111) that has a concave shape (113, 114) when viewed in vertical section.

2. Abutment system (200) according to claim 1, **characterized in that** the lateral region (111), which has a concave shape (113, 114) when viewed in vertical section, creates an edge-free transition from the substantially planar proximal interface surface (109) to the circumferential edge/shoulder (105).

3. Abutment system (200) according to claim 1, **characterized in that** the circumferential edge/shoulder (105) has a scalloped course in the interdental side view.

4. Abutment system (200) according to claim 1, **characterized in that** the abutment base (102) has
- a through-hole (117) in the area of the scalloped surface (104) for fixing the prosthetic post (210), wherein the through-hole (117) extends substantially parallel, preferably coaxial, to the axis.

5. Abutment system (200) according to claim 1 or 4, **characterized in that** the abutment base (102) has an elliptical plan shape (E1) or a rounded-deltoid plan shape (E2, E3, E4) when viewed in horizontal section.

6. Abutment system (200) according to one of the preceding claims 1, 4, or 5, **characterized in that** the first interface (107) is designed for placement of the abutment base (102) in a rotationally fixed manner on the implant element (103) in at least three different indexing positions with respect to the axis.

7. Abutment system (200) according to claim 6, **characterized in that** the abutment base (102) comprises in the region of the first interface (107)
- a connecting post for an internal implant connection (115), or
- a receiving opening for an external implant connection (115).

8. Abutment system (200) according to claim 6, **characterized in that** the first interface (107) is designed as a hex interface that allows the abutment base (102) to be placed on the implant element (103) in one of six different indexing positions with respect to the axis.

9. Abutment system (200) according to one of the preceding claims, **characterized in that** the prosthetic post (210) can be fixed by clamping or screwing, wherein circumferential grooves are provided in particular on the prosthetic post (210) in order to be able to clamp or tightly screw the prosthetic post (210).

10. Dental prosthesis implant (100) having an abutment system (200) according to one of the preceding claims 1 to 9 and having an implant (103), **characterized in that** the implant (103) comprises a post-shaped section (101) with an external thread, and **in that** the implant (103) is designed separately from the abutment base (102), wherein the implant (103) comprises a main body which is designed substantially rotationally symmetrical to the central axis.

11. Dental prosthetic implant (100) according to claim 10, **characterized in that** the abutment base (102) is screwable with the implant (103).

12. Dental prosthetic implant (100) according to claim 10, **characterized in that** the implant (103) has a central bore (118) which extends coaxially to the axis and which is provided with an internal thread for accommodating a threaded rod or a screw (120).

13. Dental prosthesis implant (100) according to claim 10, **characterized in that** a circumferential chamfer (108) is provided in the region of the first interface (107) on the implant (103) and/or on a proximal interface surface (109) of the abutment base (102) to promote bone apposition and/or soft tissue apposition after implantation.

14. Dental prosthesis implant (100) according to one of the preceding claims 10 to 13, **characterized in that**, as viewed from a proximal position to a distal position, the implant (103) has a circumferential reduction (108) in the region of a distal upper side (110), **in that** the abutment base (102) rests with its proximal interface surface (109) flat on the distal upper side (110) of the implant (103), and **in that** the lateral region (111) of the abutment base (102), which has a concave shape (113, 114) when viewed in vertical section, follows directly or at a small distance from the circumferential reduction (108).

15. Implant set comprising at least two abutment bases (102) and a separate prosthetic post (210), wherein each abutment base of the (102) implant set has a different plan shape (E1, E2, E3, E4) and/or size and wherein at least one of the abutment bases (102) comprises a first interface (107), which has a substantially planar proximal interface surface (109) for placement on an implant (103), and a second interface for attachment of a prosthetic element, wherein the at least one abutment base (102) has a three-dimensional shape that is designed in a non-symmetrical manner relative to an axis that is concentric and at a right angle to the interface surface (109), and wherein the separate prosthetic post (210) can be fixed in the region of an upper side (104) of the at least one abutment base (102), wherein the prosthetic post (210) extends coaxially to the axis in the fixed state, **characterized in that**
- the upper side (104) of the at least one abutment base (102) is a scalloped upper side (104) having an apex (112) and a circumferential edge/shoulder (105),
- the upper side of the at least one abutment base (102) has a first level (NA) and a different second level (NI) in the interdental side view, and
- the at least one abutment base (102) has a lateral region (111) that has a concave shape (113, 114) when viewed in vertical section.

## Revendications

1. Système de pilier (200) destiné à être utilisé dans la région des dents de devant et prémolaires, ayant une base (102) qui comprend une première interface (107) présentant une surface d'interface proximale (109) essentiellement plane pour le placement sur un implant (103), et une deuxième interface pour fixer un élément prothétique, la base de pilier (102) ayant une forme tridimensionnelle qui s'étend de manière non symétrique par rapport à un axe qui est concentrique et perpendiculaire par rapport à la surface d'interface (109), et le système de pilier (200) comprenant un montant prothétique séparé (210) qui peut être fixé dans la région d'un côté supérieur (104) de la base de pilier (102), le montant prothétique (210) s'étendant, lorsqu'il est fixé, de façon coaxiale par rapport à l'axe, le côté supérieur de la base de pilier (102) présentant, dans la vue de côté interdentaire, un niveau vestibulaire (NA) et un niveau oral différent (NI), **caractérisé en ce que** le côté supérieur (104) de la base de pilier (102) est un côté supérieur en forme de lobe (104) avec un apex (112) et un bord/épaulement (105) périphérique non symétrique, et **en ce que** la base de pilier (102) possède une région extérieure (111) qui présente une forme concave (113, 114) vue en coupe verticale.

2. Système de pilier (200) selon la revendication 1, **caractérisé en ce que** la région extérieure (111) qui présente une forme concave (113, 114) vue en coupe verticale, créé une transition sans arêtes entre la surface d'interface proximale essentiellement plane (109) et le bord/épaulement périphérique (105).

3. Système de pilier (200) selon la revendication 1, **caractérisé en ce que** le bord/épaulement périphérique (105) a, dans la vue de côté interdentaire, un profil en forme de lobe.

4. Système de pilier (200) selon la revendication 1, **caractérisé en ce que** la base de pilier (102) présente :
- un orifice (117) dans la région de la surface en forme de lobe (104) pour fixer le montant prothétique (210), l'orifice (117) s'étendant essentiellement parallèlement, de préférence de façon coaxiale par rapport à l'axe.

5. Système de pilier (200) selon la revendication 1 ou 4, **caractérisé en ce que** la base de pilier (102), considérée en coupe horizontale, présente une forme de base elliptique (E1) ou une forme de base arrondie-deltoïde (E2, E3, E4).

6. Système de pilier (200) selon l'une des revendications précédentes 1, 4 ou 5, **caractérisé en ce que** la première interface (107) est conçue pour poser de façon fixe en rotation la base de pilier (102) sur l'élément d'implant (103) dans au moins trois positions d'indexation différentes par rapport à l'axe.

7. Système de pilier (200) selon la revendication 6, **caractérisé en ce que** la base de pilier (102) comprend dans la région de la première interface (107)
- un montant d'assemblage pour un assemblage d'implant interne (115), ou
- un orifice de logement pour un assemblage d'implant externe (115).

8. Système de pilier (200) selon la revendication 6, **caractérisé en ce que** la première interface (107) est conçue comme une interface hexagonale qui permet de poser la base de pilier (102) sur l'élément d'implant (103) dans une position parmi six positions d'indexation différentes par rapport à l'axe.

9. Système de pilier (200) selon l'une des revendications précédentes, **caractérisé en ce que** le montant prothétique (210) peut être fixé par serrage ou vissage, des rainures périphériques étant en particulier prévues sur le montant prothétique (210) pour pouvoir serrer ou visser le montant prothétique (210).

10. Implant de prothèse dentaire (100) avec un système de pilier (200) selon l'une des revendications précédentes 1 à 9 et avec un implant (103), **caractérisé en ce que** l'implant (103) comprend une section en forme de montant (101) avec un filetage mâle, et **en ce que** l'implant (103) est réalisé séparé de la base de pilier (102), l'implant (103) comprenant un corps de base qui est réalisé essentiellement symétrique en rotation par rapport à l'axe central.

11. Implant de prothèse dentaire (100) selon la revendication 10, **caractérisé en ce que** la base de pilier (102) peut être vissée avec l'implant (103).

12. Implant de prothèse dentaire (100) selon la revendication 10, **caractérisé en ce que** l'implant (103) présente un alésage central (118) qui s'étend de façon coaxiale par rapport à l'axe et qui est muni d'un filet femelle pour recevoir une tige filetée ou une vis (120).

13. Implant de prothèse dentaire (100) selon la revendication 10, **caractérisé en ce qu'**il est prévu dans la région de la première interface (107) au niveau de l'implant (103) et/ou au niveau d'une surface d'interface proximale (109) de la base de pilier (102) un chanfrein périphérique (108) pour favoriser l'apposition osseuse et/ou l'apposition des parties molles après l'implantation.

14. Implant de prothèse dentaire (100) selon l'une des revendications précédentes 10 à 13, **caractérisé en ce que**, vu depuis une position proximale vers une position distale, l'implant (103) présente dans la région d'un côté supérieur distal (110) une réduction de circonférence (108), **en ce que** la base de pilier (102) repose, avec sa surface d'interface proximale (109), à plat sur le côté supérieur distal (110) de l'implant (103), et **en ce que**, immédiatement à côté ou à faible distance de la réduction de circonférence (108), suit la région extérieure (111) de la base de pilier (102) qui présente une forme concave (113, 114) vue en coupe verticale.

15. Ensemble d'implant qui comprend au moins deux bases de pilier (102) et un montant prothétique séparé (210), chaque base de pilier (102) de l'ensemble d'implant présentant une autre forme de base (E1, E2, E3, E4) et/ou une autre taille, et au moins une des bases de pilier (102) comprenant une première interface (107) qui présente une surface d'interface proximale (109) essentiellement plane pour le placement sur un implant (103) et une deuxième interface pour fixer un élément prothétique, la au moins une base de pilier (102) ayant une forme tridimensionnelle qui s'étend de manière non symétrique par rapport à un axe qui est concentrique et perpendiculaire par rapport à la surface d'interface (109), et le montant prothétique séparé (210) pouvant être fixé dans la région d'un côté supérieur (104) de la au moins une base de pilier (102), le montant prothétique (210), lorsqu'il est fixé, s'étendant de façon coaxiale par rapport à l'axe, **caractérisé en ce que**
- le côté supérieur (104) de la au moins une base de pilier (102) est un côté supérieur en forme de lobe (104) avec un apex (112) et un bord/épaulement périphérique (105), et
- le côté supérieur de la au moins une base de pilier (102) présente, dans la vue de côté interdentaire, un premier niveau (NA) et un deuxième niveau différent (NI), et
- la au moins une base de pilier (102) a une région extérieure (111) qui présente une forme concave (113, 114) vue en coupe verticale.
